# EUROPÄISCHE PATENTSCHRIFT

(11) **EP 3 853 052 B1**
(45) Veröffentlichungstag und Bekanntmachung des Hinweises auf die Patenterteilung: **12.10.2022**
(21) Anmeldenummer: 19749643.3
(22) Anmeldetag: 26.07.2019
(51) Int. Cl.: B60J 1/20, B60J 7/00

(54) **ROLLOANORDNUNG MIT WELLROHRWICKELWELLE**
ROLLER BLIND ARRANGEMENT HAVING CORRUGATED TUBE WINDING SHAFT
SYSTÈME DE STORES COMPRENANT UN ARBRE D'ENROULEMENT À TUBE ONDULÉ

(30) Priorität: 21.09.2018 DE 102018123280
(43) Veröffentlichungstag der Anmeldung: 28.07.2021
(73) Patentinhaber: Webasto SE, 82131 Stockdorf (DE)
(72) Erfinder: ROCKELMANN, Andreas, 82131 Stockdorf (DE); SCHREIBER, Ulrich, 82131 Stockdorf (DE)
(74) Vertreter: advotec.
(86) Internationale Anmeldenummer: PCT/EP2019/070188
(87) Internationale Veröffentlichungsnummer: WO 2020/057814

(56) Entgegenhaltungen:
- EP-A1- 2 529 965
- DE-A1-102005 032 043
- DE-A1-102013 102 630

## Beschreibung

Die Erfindung betrifft eine Rolloanordnung für ein Kraftfahrzeug mit den Merkmalen des Oberbegriffs des Patentanspruchs 1.

Eine derartige Rolloanordnung ist aus der Praxis bekannt und dient bei einem Kraftfahrzeug beispielsweise zum Abschatten eines transparenten Dachabschnitts, der von einem Glasdeckel einer Schiebedachanordnung oder aus einem Glasfestdachelement gebildet sein kann. Die Rolloanordnung umfasst als Beschattungselement eine blickdichte Rollobahn, die auf eine Wickelwelle aufwickelbar bzw. von der Wickelwelle abwickelbar ist, um den entsprechenden transparenten Dachabschnitt abzuschatten. Die Wickelwelle kann gekrümmt ausgebildet sein und hierzu eine gekrümmte, fahrzeugfeste Lagerstrebe umfassen, die von einer flexiblen Hüllrohranordnung umgriffen ist, an die die Rollobahn über einen sich in Rolloquerrichtung erstreckenden Rand angebunden ist. Die Hüllrohranordnung umfasst ein einen zentralen Abschnitt bildendes Hüllrohrelement, das als Wellrohr ausgebildet ist und an seinen Enden jeweils mit einer Lagerbuchse verbunden ist, über die die Hüllrohranordnung drehbar auf der fahrzeugfesten Lagerstrebe gelagert ist. Die Rollobahn kann an ihren bezogen auf eine vertikale Rollolängsmittelebene beidseits angeordneten Rändern jeweils mit einem Führungsband versehen sein, das in einer fahrzeugfesten Führungsschiene geführt ist und jeweils an einer der Lagerbuchsen befestigt ist. Zum Aufwickeln der so seitengeführten Rollobahn umfasst die Wickelwelle eine Wickelfeder, die die Hüllrohranordnung zusammen mit den Lagerbuchsen in Aufwickelrichtung vorspannt. Dies gewährleistet, dass die Rollobahn bei Freigabe eines Zugspriegels, der an dem der Wickelwelle abgewandten Rand der Rollobahn befestigt ist, selbsttätig auf die Wickelwelle aufgewickelt wird. Bei der bekannten Rolloanordnung besteht das Problem, dass die Rollobahn auf der Wickelwelle in Rolloquerrichtung nicht ohne weiteres ohne Durchmessersprünge des resultierenden Rollowickels bis zu den Lagerbuchsen geführt werden kann. Durchmessersprünge können aber zu einer ungleichmäßigen Spannung des Stoffes beim Aufwickeln führen. Auch kann es insbesondere bei steifen, mehrschichtigen Stoffen, die als Rollobahn eingesetzt werden, zu einer deutlichen Wellen- und Faltenbildung im ausgezogenen Bereich der Rollobahn kommen. Den Durchmessersprüngen wird bisher durch beigelegte Filze oder zusätzliche Stofflagen entgegengetreten, was aber die Montage aufwändig gestaltet und auch durch das zusätzlich erforderliche Material zu Mehrkosten führt.

Aus der Druckschrift EP 2 529 965 A1 ist eine Rolloanordnung für ein Schiebedachsystem eines Kraftfahrzeuges bekannt. Diese Rolloanordnung umfasst eine Rollobahn und eine Wickelwelle, auf die die Rollobahn aufwickelbar ist oder von der die Rollobahn abwickelbar ist. Die Wickelwelle umfasst eine flexible Hüllrohranordnung, die von einer fahrzeugfesten Lagerstrebe durchgriffen ist. Die Hüllrohranordnung umfasst ein Wellrohr, an dem Wellrohrrippen ausgebildet sind, die durch Wellentäler voneinander getrennt sind.

Der Erfindung liegt die Aufgabe zugrunde, eine gemäß der einleitend genannten Gattung gebildete Rolloanordnung zu schaffen, bei der das Risiko von Durchmessersprüngen des an der Wickelwelle ausgebildeten Rollowickels minimiert ist.

Diese Aufgabe ist erfindungsgemäß durch die Rolloanordnung mit den Merkmalen des Patentanspruchs 1 gelöst.

Bei der Rolloanordnung nach der Erfindung ist also das vorzugsweise aus Kunststoff gefertigte Wellrohr an seinen beiden Enden jeweils mit einer Koppelumspritzung versehen, über die eine Anbindung der Hüllrohranordnung an Lagerbuchsen möglich ist. Die Koppelumspritzungen haben jeweils einen Außendurchmesser, der dem maximalen Außendurchmesser des Wellrohrs entspricht. Die Wellen bzw. Rippen des Wellrohrs haben somit eine Höhe bzw. einen Durchmesser, der dem Außendurchmesser der Koppelumspritzungen entspricht. Die Wellenkämme der Rippen fluchten damit mit der insbesondere einer Zylinderfläche folgenden Umfangsfläche der Koppelumspritzung. Der auf der Wickelwelle bzw. der Hüllrohranordnung ausgebildete Rollowickel kann dadurch glatt und ohne Durchmessersprünge bis zu den beidseits angeordneten Lagerbuchsen geführt werden. Das Risiko einer Wellen- und Faltenbildung an der Rollobahn ist somit minimiert. Durch die erfindungsgemäße Ausgestaltung der Hüllrohranordnung entfallen auch zusätzliche Material- und Prozesskosten für Maßnahmen, die Durchmessersprüngen entgegenwirken. Das Wellrohr selbst, dessen Rippen bzw. Wellen einen Außendurchmesser haben, der dem Außendurchmesser der Koppelumspritzung entspricht, kann sehr torsionssteif ausgebildet werden. Gleichzeitig kann die bei der Betätigung der Wickelwelle aufzubringende Walkarbeit reduziert werden. Die hohe Torsionssteifigkeit führt zu geringen plastischen Verformungen im Bereich der Hüllrohranordnung. Die geringe Walkarbeit führt wiederum zu einer geringen Hysterese einer Wickelfeder, die die Hüllrohranordnung in Aufwickelrichtung der Rollobahn vorspannt. Insbesondere kann dies bei langen und/oder breiten Rollobahnen, die mit einer hohen Federvorspannung beaufschlagt sind, zu einer verbesserten Funktion der Rolloanordnung führen.

Bei einer speziellen Ausführungsform der Rolloanordnung nach der Erfindung weist das Wellrohr an seinen Enden jeweils einen zylindrischen Bereich auf, der von der betreffenden Koppelumspritzung übergriffen ist und somit die Schnittstelle für die Koppelumspritzung bildet. Der Außendurchmesser der zylindrischen Verbindungsstutzen entspricht insbesondere dem Außendurchmesser des Wellrohrs im Bereich der Wellrohrtäler und ist in jedem Falle geringer als derjenige der Wellrohrrippen. Die Verbindungsstutzen können bei der Herstellung des Wellrohrs nach einem Vakuumformprozess oder Blasformprozess durch entsprechende Formgebung der Vakuumform bzw. Blasform in einfacher Weise mit ausgeformt werden.

Um die Anbindung der Koppelumspritzung an das Wellrohr zu verbessern, hat das Wellrohr in seinen Endabschnitten jeweils mindestens eine Aussparung, die von der betreffenden Koppelumspritzung ausgefüllt ist und somit eine Ankerstelle für den Kunststoff der Koppelumspritzung bildet.

Damit die Koppelumspritzung auch in Wellrohrtäler einfließen kann, ohne dass deren Außendurchmesser denjenigen der Wellrohrrippen übersteigt, durchgreift die Aussparung bei einer speziellen Ausführungsform der Rolloanordnung nach der Erfindung zumindest eine Wellrohrrippe, so dass die Aussparung und mindestens ein Wellental des Wellrohrs von der Koppelumspritzung ausgefüllt sind. Die Aussparung kann als Längsschlitz oder Längsnut ausgebildet sein.

Durch die Aussparung kann der Kunststoff der Koppelumspritzung in mindestens eines der Wellentäler des Wellrohrs einfließen und sich in Umfangsrichtung in den Wellentälern verteilen. Entsprechend kann die Koppelumspritzung auch an der Innenseite des Wellrohrs in mit den Wellrohrrippen korrespondierende Vertiefungen einfließen, so dass eine stabile Anbindung der betreffenden Koppelumspritzung an das Wellrohr gewährleistet ist.

Die Aussparung kann bei einem Ablängvorgang des Wellrohrs unmittelbar durch entsprechende Ausgestaltung des Werkzeugs ausgestanzt werden. Zum Ablängen und zum Ausbilden der Aussparung ist damit nur ein Werkzeughub erforderlich.

Bei einer bevorzugten Ausführungsform der Rolloanordnung nach der Erfindung hat das Wellrohr zumindest in einem seiner beiden stirnseitigen Endabschnitte zwei Aussparungen, die bezogen auf die Achse des Wellrohrs 180° zueinander versetzt sind. Beim Ablängen des Wellrohrs können diese beiden Aussparungen ebenfalls in einem Hub ausgeformt werden, da sie in Stanzrichtung übereinander liegen.

Weitere Vorteile und vorteilhafte Ausgestaltungen des Gegenstandes der Erfindung sind der Beschreibung, der Zeichnung und den Patentansprüchen entnehmbar.

Ausführungsbeispiele von Rolloanordnungen nach der Erfindung sind in der Zeichnung schematisch vereinfacht dargestellt und werden in der nachfolgenden Beschreibung näher erläutert. Es zeigt:
- Figur 1: eine schematische Draufsicht auf ein Fahrzeugdach mit einer Rolloanordnung nach der Erfindung;
- Figur 2: einen schematischen Längsschnitt durch eine Wickelwelle der Rolloanordnung;
- Figur 3: eine perspektivische Ansicht eines Endabschnitts einer Hüllrohranordnung der Wickelwelle;
- Figur 4: eine perspektivische Ansicht eines Endabschnitts eines Wellrohrs der Hüllrohranordnung nach Figur 3;
- Figur 5: eine perspektivische Ansicht eines Endabschnitts einer alternativen Ausführungsform einer Hüllrohranordnung;
- Figur 6: eine perspektivische Ansicht eines Endabschnitts eines Wellrohrs der Hüllrohranordnung nach Figur 5; und
- Figur 7: einen Längsschnitt durch den Endabschnitt der Hüllrohranordnung nach Figur 5.

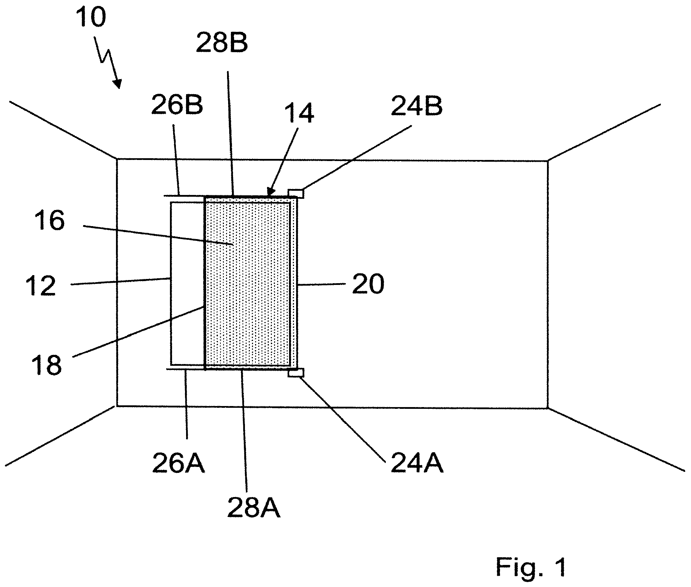

In Figur 1 ist ein Fahrzeugdach 10 eines ansonsten nicht näher dargestellten Personenkraftwagens gezeigt, das einen Dachausschnitt 12 aufweist, welcher mittels eines hier nicht näher dargestellten, transparenten Deckelelements geschlossen oder zumindest teilweise freigegeben werden kann.

Das Fahrzeugdach 10 umfasst als Beschattungselement für den Dachausschnitt 12 eine Rolloanordnung 14, die eine Rollobahn 16 aus einem faltbaren bzw. wickelbaren, blickdichten Material aufweist. Die Rollobahn 16 ist an ihrem vorderen, sich in Dachquerrichtung erstreckenden Rand mit einem Zugspriegel 18 versehen, der ein Betätigungselement der Rolloanordnung 14 darstellt. An ihrem dem Zugspriegel 18 abgewandten Rand ist die Rollobahn 16 an eine Wickelwelle 20 angebunden, die sich ebenfalls in Dachquerrichtung erstreckt.

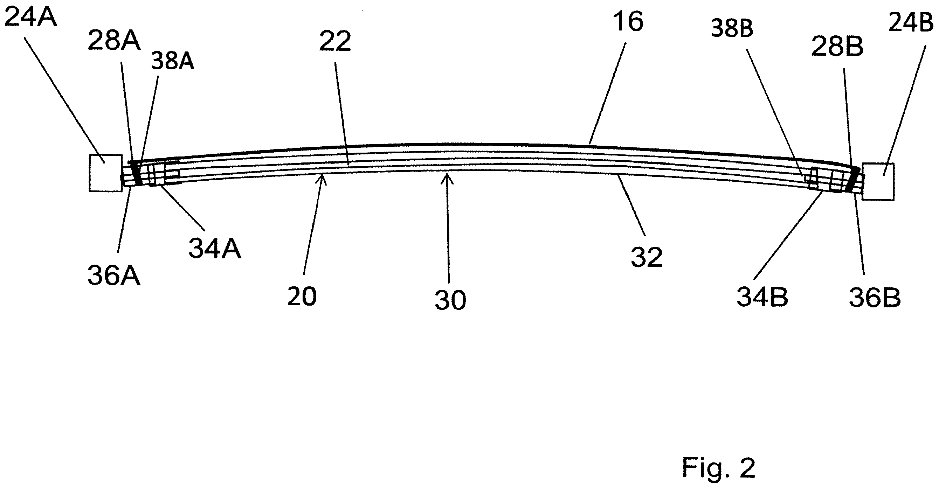

Die in Figur 2 näher dargestellte Wickelwelle 20 ist gekrümmt ausgebildet und folgt damit einer Krümmung des Fahrzeugdachs 10. Dies ist dadurch realisiert, dass die Wickelwelle 20 eine gekrümmte, fahrzeugfeste Lagerstrebe 22 aufweist, die bezogen auf eine vertikale Dachlängsmittelebene beidseits jeweils mit einem fahrzeugfesten Lagerelement 24A bzw. 24B verbunden ist. Die Lagerelemente 24A und 24B sind jeweils an einem heckseitigen Ende einer betreffenden Führungsschiene 26A bzw. 26B angeordnet, welche sich in Dachlängsrichtung bzw. in Ausziehrichtung der Rollobahn 16 erstreckt und in welcher ein jeweiliger seitlicher Rand der Rollobahn 16 über ein Führungsband 28A bzw. 28B geführt ist.

Die Wickelwelle 20 umfasst des Weiteren eine flexible Hüllrohranordnung 30, welche von der Lagerstrebe 22 durchgriffen ist. Die Hüllrohranordnung 30 umfasst wiederum als flexibles Hüllrohrelement ein Wellrohr 32, das als Kunststoff-Vakuumformteil ausgebildet ist und das an seinen bezogen auf die vertikale Dachlängsmittelebene beidseits angeordneten Enden jeweils mit einer Koppelumspritzung 34A bzw. 34B aus Kunststoff versehen ist. Über die Koppelumspritzung 34A und 34B ist die Hüllrohranordnung 30 beidseits jeweils mit einer Lagerbuchse 36A bzw. 36B verbunden und so mit ihren Enden drehbar auf der Lagerstrebe 22 bzw. den Lagerzapfen 38A und 38B derselben gelagert.

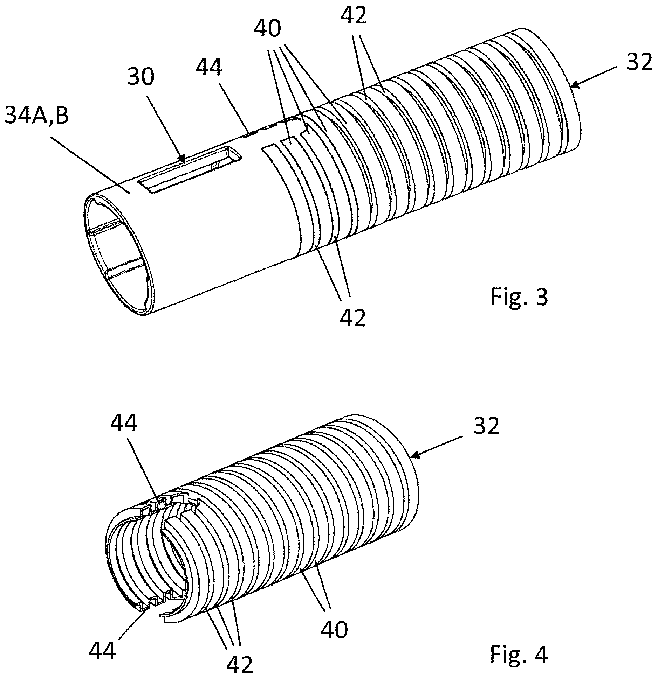

In den Figuren 3 und 4 ist ein Endbereich der Hüllrohranordnung 30 dargestellt, der die Koppelumspritzung 34A bzw. 34B umfasst, die an das Wellrohr 32 angeformt ist. Das Wellrohr 32 umfasst entlang seiner Erstreckung eine Vielzahl an ringbundartigen Wellrohrrippen 40, welche durch Wellentäler 42 voneinander getrennt sind und eine zylindrische Ringfläche bilden. In seinen Endbereichen ist das Wellrohr 32 beidseits mit zwei axialen, schlitzartigen Aussparungen 44 versehen, welche in Umfangsrichtung 180° zueinander versetzt sind und welche drei Wellrohrrippen 40 durchgreifen. Die Koppelumspritzung 34A bzw. 34B füllt die Aussparung 44 und die ersten drei Wellentäler 42 aus, die sich an die Aussparung 44 anschließen. Der Außendurchmesser der Koppelumspritzung 34A bzw. 34B entspricht dem Außendurchmesser der Wellrohrrippen 40, so dass die Koppelumspritzungen 34A und 34B zusammen mit den hieran angrenzenden Wellrohrrippen 40 jeweils eine durchgängige Zylinderfläche bilden und der Rollowickel der Rollobahn 16 auf der Wickelwelle 20 ohne Durchmessersprünge bis an die Lagerbuchsen 36A und 36B, die mit den Koppelumspritzungen 34A und 34B drehfest verbunden sind, herangeführt werden kann.

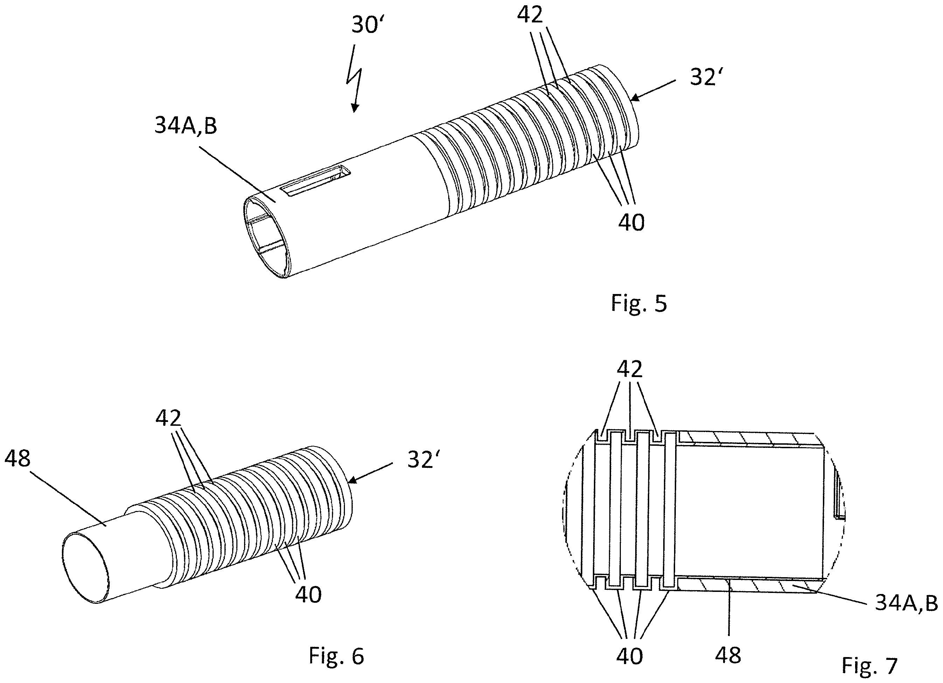

In den Figuren 5 bis 7 ist eine alternative Ausführungsform einer Hüllrohranordnung 30' dargestellt, die sich von der Hüllrohranordnung nach den Figuren 3 und 4 dadurch unterscheidet, dass sie aus einem Wellrohr 32' gebildet ist, an dessen in den Endbereichen äußersten Wellrohrrippen 40 jeweils ein zylindrischer Bereich bzw. Verbindungsstutzen 48 anschließt, dessen Außendurchmesser dem Außendurchmesser des Wellrohrs 32' im Bereich der Wellentäler 42 entspricht. Die zylindrische Verbindungsstutzen 48 sind jeweils von einer Kunststoffumspritzung 34A bzw. 34B übergriffen, deren Außendurchmesser dem Außendurchmesser der Wellrohrrippen 40 entspricht. Damit hat die Hüllrohranordnung 30' entsprechend der Hüllrohranordnung nach den Figuren 3 und 4 bis hin an die äußeren Stirnseiten der Koppelumspritzungen 34A und 34B, d. h. abgesehen von den Wellentälern 42, durchgängig einen konstanten Außendurchmesser.

### Bezugszeichenliste

- 10: Fahrzeugdach
- 12: Dachöffnung
- 14: Rolloanordnung
- 16: Rollobahn
- 18: Zugspriegel
- 20: Wickelwelle
- 22: Lagerstrebe
- 24A, B: Lagerelement
- 26A, B: Führungsschiene
- 28A, B: Führungsband
- 30,30': Hüllrohranordnung
- 32,32': Wellrohr
- 34A, B: Koppelumspritzung
- 36A, B: Lagerbuchse
- 38A, B: Lagerzapfen
- 40: Wellrohrrippe
- 42: Wellental
- 44: Aussparung
- 48: Verbindungsstutzen

## Patentansprüche

1. Rolloanordnung für ein Kraftfahrzeug, umfassend eine Rollobahn (16) und eine Wickelwelle (20), auf die die Rollobahn (16) aufwickelbar ist oder von der die Rollobahn (16) abwickelbar ist und die eine flexible Hüllrohranordnung (30, 30') umfasst, die von einer fahrzeugfesten Lagerstrebe (22) durchgriffen ist und die als Hüllrohrelement ein Wellrohr (32, 32') umfasst, an dem Wellrohrrippen (40) ausgebildet sind, die durch Wellentäler (42) voneinander getrennt sind, **dadurch gekennzeichnet, dass** das Wellrohr (32, 32') an seinen beiden Enden jeweils mit einer Koppelumspritzung (34A, 34B) versehen ist, die mit einer jeweiligen Lagerbuchse (36A, 36B) verbunden ist und die einen Außendurchmesser hat, der dem maximalen Außendurchmesser des Wellrohrs (32, 32') entspricht.

2. Rolloanordnung nach Anspruch 1, **dadurch gekennzeichnet, dass** das Wellrohr (32') an seinen Enden jeweils einen zylindrischen Bereich aufweist, der von der betreffenden Koppelumspritzung (34A, 34B) übergriffen ist.

3. Rolloanordnung nach Anspruch 1 oder 2, **dadurch gekennzeichnet, dass** das Wellrohr (32) in seinen Endabschnitten jeweils mindestens eine Aussparung (44) hat, die von der betreffenden Koppelumspritzung (34A, 34B) ausgefüllt ist.

4. Rolloanordnung nach Anspruch 3, **dadurch gekennzeichnet, dass** die Aussparung (44) zumindest eine Wellrohrrippe (40) durchgreift, so dass die Aussparung (44) und mindestens ein Wellental (42) des Wellrohrs (32) von der Koppelumspritzung (34A, 34B) ausgefüllt sind.

5. Rolloanordnung nach Anspruch 3 oder 4, **dadurch gekennzeichnet, dass** die Aussparung (40) als Längsschlitz oder Längsnut ausgebildet ist.

6. Rolloanordnung nach einem der Ansprüche 3 bis 5, **dadurch gekennzeichnet, dass** das Wellrohr (32) zumindest in einem seiner beiden stirnseitigen Endabschnitte zwei Aussparungen (44) hat, die bezogen auf die Achse des Wellrohrs (32) 180° zueinander versetzt sind.

## Claims

1. A roller blind arrangement for a motor vehicle, the roller blind arrangement comprising a roller blind web (16) and a winding shaft (20) onto which the roller blind web (16) can be wound or from which the roller blind web (16) can be unwound and which comprises a flexible surrounding-tube arrangement (30, 30') penetrated by a vehicle-attached bearing strut (22) and comprising a corrugated tube (32, 32') as a surrounding-tube element, corrugated-tube ribs (40) being formed on the corrugated tube (32, 32') and being separated from each other by troughs (42), **characterized in that** the corrugated tube (32, 32') has a coupling overmold (34A, 34B) at each of its two ends, each coupling overmold (34A, 34B) being connected to a respective bearing bush (36A, 36B) and having an outer diameter which corresponds to the maximum outer diameter of the corrugated tube (32, 32').

2. The roller blind arrangement according to claim 1, **characterized in that** the corrugated tube (32') has a cylindrical portion at each of its ends, each cylindrical portion being covered by the respective coupling overmold (34A, 34B).

3. The roller blind arrangement according to claim 1 or 2, **characterized in that** the corrugated tube (32) has at least one recess (44) in each of its end portions, each recess (44) being filled by the respective coupling overmold (34A, 34B).

4. The roller blind arrangement according to claim 3, **characterized in that** the recess (44) runs through at least one corrugated-tube rib (40), the recess (44) and at least one trough (42) of the corrugated tube (32) being filled by the coupling overmold (34A, 34B).

5. The roller blind arrangement according to claim 3 or 4, **characterized in that** the recess (40) is a longitudinal slot or a longitudinal groove.

6. The roller blind arrangement according to any one of claims 3 to 5, **characterized in that** the corrugated tube (32) has two recesses (44) in at least one of its two end portions, the recesses (44) being offset from each other by 180° in relation to the axis of the corrugated tube (32).

## Revendications

1. Ensemble de store pour un véhicule automobile, l'ensemble de store comprenant un lé de store (16) et un arbre d'enroulement (20) sur lequel le lé de store (16) peut être enroulé ou sur lequel le lé de store (16) peut être déroulé et qui comprend un ensemble de tube enveloppe (30, 30') flexible qui est pénétré par une barre de support (22) solidaire du véhicule et qui comprend un tube ondulé (32, 32') comme élément de tube enveloppe, des nervures de tube ondulé (40) étant formées sur le tube ondulé (32, 32') et étant séparées l'une de l'autre par des creux (42), **caractérisé en ce que** le tube ondulé (32, 32') a un surmoulage de liaison (34A, 34B) à chacune de ses deux extrémités, chaque surmoulage de liaison (34A, 34B) étant lié à un coussinet (36A, 36B) respectif et ayant un diamètre extérieur qui correspond au diamètre extérieur maximal du tube ondulé (32, 32').

2. Ensemble de store selon la revendication 1, **caractérisé en ce que** le tube ondulé (32') a une partie cylindrique à chacune de ses extrémités, chaque partie cylindrique étant couverte du surmoulage de liaison (34A, 34B) respectif.

3. Ensemble de store selon la revendication 1 ou 2, **caractérisé en ce que** le tube ondulé (32) a au moins un évidement (44) dans chacune de ses parties d'extrémité, chaque évidement (44) étant rempli du surmoulage de liaison (34A, 34B) respectif.

4. Ensemble de store selon la revendication 3, **caractérisé en ce que** l'évidement (44) s'étend à travers au moins une nervure de tube ondulé (40) de sorte que l'évidement (44) et au moins un creux (42) du tube ondulé (32) sont remplis du surmoulage de liaison (34A, 34B).

5. Ensemble de store selon la revendication 3 ou 4, **caractérisé en ce que** l'évidement (40) est une fente longitudinale ou une rainure longitudinale.

6. Ensemble de store selon l'une quelconque des revendications 3 à 5, **caractérisé en ce que** le tube ondulé (32) a deux évidements (44) dans au moins une de ses parties d'extrémité, les évidements (44) étant décalés l'un de l'autre par 180° par rapport à l'axe du tube ondulé (32).
